# EUROPÄISCHE PATENTANMELDUNG

(11) **EP 4 339 014 A1**
(43) Veröffentlichungstag der Anmeldung: **20.03.2024**
(21) Anmeldenummer: 23198209.1
(22) Anmeldetag: 19.09.2023
(51) Int. Cl.: B60N 2/06, B60N 2/07, B60N 2/08, B60N 2/24, B60N 2/30, B60N 3/06, B61D 33/00

(54) **FÜHRERHAUSSITZ**

(30) Priorität: 19.09.2022 DE 102022123980
(71) Anmelder: Vossloh Rolling Stock GmbH, 24107 Kiel (DE)
(72) Erfinder: HILDEBRANDT, Tim, 24244 Felm (DE); KOHLEY, Stephan, 24159 Kiel (DE)
(74) Vertreter: Bittner, Thomas L.

(57) **Zusammenfassung**

Die vorliegende Erfindung betrifft einen Führerhaussitz, insbesondere Führerhausklappsitz (1), vorzugsweise Führerhaus-Beifahrersitz, für ein Schienenfahrzeug, insbesondere eine Mittelführerhaus-Lokomotive, umfassend eine Sitzfläche (3) und eine Fußstütze (5), wobei der Führerhaussitz wenigstens eine Sitzposition, in der eine Bedienperson auf dem Führerhaussitz sitzen kann, und eine Passivposition einnehmen kann, in welcher die Sitzfläche (3) und die Fußstütze (5) aus der Sitzposition weggeklappt sind.

## Beschreibung

Die vorliegende Erfindung betrifft Führerhaussitz für einen Fahrzeugführer, insbesondere einen Führerhausklappsitz, vorzugsweise einen Führerhaus-Beifahrersitz für einen Beifahrer, für ein Schienenfahrzeug, insbesondere für eine Mittelführerhaus-Lokomotive.

### Hintergrund

Verschiebbare Führerhaussitze sind aus dem Stand der Technik grundsätzlich bekannt. Die Verschiebung der Führerhaussitze in Fahrtrichtung erfolgt in der Regel über einen Verschiebemechanismus aus einem führerhauskastenseitigen, schienenartigen Führungselement und einer sitzseitigen Eingriffseinrichtung, die zum stufenlosen und verrastenden Längsverschieben des Sitzes relativ zur führerhauskastenseitigen Führungsschiene aufeinander abgestimmt sind. Eine wesentliche Herausforderung bei der Auslegung der Führerhaussitze und deren Verschiebemechanismus besteht zum einen darin, dass die Führerhaussitze verschiedene Betriebspositionen einnehmen können müssen, um eine ergonomische Handhabung und Führerstandbedienung für die Fahrzeugführer zu gewährleisten. Zu den verschiedenen Betriebspositionen kann auch eine Passiv- oder Parkposition gehören, in der der Führerhaussitz nicht verwendet wird, sondern beiseite gefahren und/oder geklappt wird. Dies gilt insbesondere für die Führerhaus-Beifahrerklappsitze, die der Streckenbeobachtung für eine zweite Person, nämlich einen Beifahrer, dienen und keine Steuerungsmöglichkeit des Fahrzeuges besitzen. Diese Sitze müssen bei Nicht-Benutzung möglichst platzsparend verstaut werden können, sodass im Evakuierungsfall kein Hindernis, insbesondere im Fluchtweg, besteht. Eine wesentliche Herausforderung bei der Auslegung von Führerhaussitzen mit Fußstützen besteht ferner darin, dass die Fußstützen zum einen in der aktiven Betriebsposition für den jeweiligen Nutzer ergonomisch positionierbar und gut verwendbar und zum anderen auch in der Passiv- bzw. Parkposition derart verstaubar sind, dass sie nicht im Weg sind.

Grundsätzliche Befestigungsanordnungen für Fahrgastsitze sind beispielsweise aus der EP 2 948 339 B1 bekannt, um eine schrittweise Feinausrichtung der Fahrgastsitze zu erreichen. Die EP 2 948 339 B1 beschäftigt sich jedoch nicht mit Führerhaussitzen, insbesondere nicht mit Führerhaussitzen mit Fußstützen.

### Zusammenfassung

Eine Aufgabe der vorliegenden Erfindung besteht darin, die Nachteile aus dem Stand der Technik zu beheben, insbesondere einen Führerhaussitz mit Fußstütze ergonomischer auszugestalten und/oder bei dem auf konstruktiv einfache Art und Weise die unterschiedlichen Betriebspositionen einnehmbar sind.

Die Aufgabe wird durch den Gegenstand der unabhängigen Ansprüche gelöst.

Danach ist ein insbesondere verschiebbarer und/oder klappbarer Führerhaussitz, insbesondere ein Führerhausklappsitz, vorzugsweise ein Führerhausbeifahrersitz, wie ein Führerhausbeifahrerklappsitz, für ein Schienenfahrzeug, insbesondere eine Mittelführerhauslokomotive, bereitgestellt. Der Führerhaussitz ist in einem Führerhaus des Schienenfahrzeugs anzuordnen und wird von einem Fahrzeugführer bzw. einem Fahrzeugbeifahrer verwendet. Aufgrund der Tatsache, dass es sich um Sitze an einem Arbeitsplatz handelt, bestehen hierbei bei der Anordnung Herausforderungen im Hinblick auf Sitzkomfort zum einen und Gewährleistung der Zugänglichkeit zum Führerhaus bzw. zu einem im Führerhaus angeordneten Führerstand, welcher sämtliche Bedienelemente zum Betrieb des Schienenfahrzeugs enthält, zum anderen. Der erfindungsgemäße Führerhaussitz stellt einen optimalen Kompromiss aus Zugänglichkeit und Komfort dar und bietet gleichermaßen die Möglichkeit, den Führerhaussitz auf ergonomische, einfache Art und Weise zwischen verschiedenen Betriebspositionen zu verstellen. Gattungsgemäß für die erfindungsgemäßen Führerhaussitze ist, dass diese sowohl eine Sitzfläche für die Bedienperson als auch eine Fußstütze aufweisen. Insbesondere bei derartigen Führerhaussitzen mit Fußstütze konnte der oben beschriebene Kompromiss aus Zugänglichkeit zum Führerhaus sowie hohem Komfort in der Sitzposition bislang im Stand der Technik nicht zufriedenstellend gelöst werden.

Der erfindungsgemäße Führerhaussitz umfasst eine Sitzfläche und eine Fußstütze und ist zwischen einer Sitzposition, in der eine Bedienperson auf dem Führerhaussitz sitzen kann, und einer Passivposition verlagerbar, in welcher die Sitzfläche und die Fußstütze aus der Sitzposition weggeklappt sind. Die Passivposition kann auch als Verstauungsposition bezeichnet werden, da diese dazu vorgesehen ist, den Führerhaussitz möglichst platzsparend an einem dafür vorgesehenen Verstauraum unterzubringen, sodass der vom Führerhaussitz in der Sitzposition beanspruchte Raum im Führerhaus freigegeben wird. Im Falle eines Führerhausfahrzeugführersitzes kann die Passivposition beispielsweise im Wesentlichen unterhalb des Führerstands angeordnet sein. Sofern es sich beim Führerhaussitz um einen Führerhausbeifahrersitz handelt, kann die Passivposition derart gewählt sein, dass der Führerhausbeifahrersitz den Zu- und Ausgang zum Führerhaus freigibt, insbesondere um im Evakuierungsfall kein Hindernis darzustellen. Der erfindungsgemäße Führerhaussitz ist demnach im Hinblick auf den Kompromiss aus Komfort und Zugänglichkeit des Führerhauses dahingehend optimiert, dass einerseits über die Fußstütze ein sehr komfortabler Führungssitz geschaffen ist, dieser jedoch weggeklappt werden kann, um die Anforderung an die Zugänglichkeit des Führerhauses bei Bedarf zu erfüllen. Das Verbringen der Fußstütze und der Sitzfläche aus der Sitzposition in die Passivposition kann beispielsweise gemeinsam, also durch entweder eine Betätigung der Fußstütze oder eine Betätigung der Sitzfläche, wobei die jeweils andere Komponente sozusagen automatisch mit weggeklappt wird, oder auch separat, d. h. unabhängig voneinander, erfolgen.

In einer beispielhaften Ausführung des erfindungsgemäßen Führerhaussitzes ist der Führerhaussitz in Längsrichtung des Schienenfahrzeugs insbesondere stufenlos verschiebbar. Beispielsweise kann der Führerhaussitz an einer Seitenwand des Führerhauses insbesondere längsverschiebbar gelagert sein. Die Lagerung kann über mehrere Lagereinrichtungen erfolgen, um zum einen das hohe Gewicht des Führerhaussitzes gegebenenfalls zusammen mit der auf dem Führerhaussitz sitzenden Bedienperson tragen zu können und andererseits eine gute Führung bei der Längsverschiebung bereitzustellen.

Gemäß einer beispielhaften Weiterbildung des erfindungsgemäßen Führerhaussitzes sind die Sitzfläche und die Fußstütze derart miteinander gekoppelt, dass die Fußstütze der Sitzfläche bei einer Längsverschiebung des Führerhaussitzes folgt. Mit anderen Worten bewegt sich die Fußstütze insbesondere automatisch mit bei einer Längsverschiebung des Führerhaussitzes, die in der Regel dadurch initiiert wird, dass die Bedienperson die Sitzfläche oder eine mit der Sitzfläche gekoppelte Sitzlehne greift und in die gewünschte Position verschiebt. Die Sitzfläche und die Fußstütze können demnach gemeinsam verschoben werden. Die Kopplung zwischen Sitzfläche und Fußstütze kann beispielsweise über eine Auskragung erfolgen, die beispielsweise durch eine im Bereich der Sitzfläche befestigte Tragarmstruktur gebildet sein kann, um den notwendigen Abstand zwischen Sitzfläche und Fußstütze zu erwirken bzw. zu schaffen.

In einer weiteren beispielhaften Ausführung des erfindungsgemäßen Führerhaussitzes ist der Führerhaussitz über eine Geradführung, wie eine Schienenführung, längsverschiebbar an einer Seitenwand des Führerhauses gelagert. Dabei umfasst die Geradführung eine der Sitzfläche zugeordnete Führungseinrichtung und eine der Fußstütze zugeordnete Führungseinrichtung. Durch die doppelte Führungseinrichtungsanordnung wird die Last des Sitzes inklusive der Fußstütze und gegebenenfalls der Bedienperson aufgeteilt, sodass zum einen die Belastung auf die einzelnen Führungseinrichtungen vermindert ist und zum anderen eine möglichst reibungsarme und gut gleitende oder abrollende Verlagerungsbewegung einhergehen kann. Die Führungseinrichtungen können auf demselben Führungsprinzip basieren, beispielsweise durch einen Gleitkontakt, einen Abrollkontakt oder dergleichen.

Gemäß einer weiteren beispielhaften Weiterbildung des erfindungsgemäßen Führerhaussitzes weist die der Fußstütze zugeordnete Führungseinrichtung eine führerhausseitige Führungsschiene auf, welche in Bezug auf eine führerhausseitige, der Sitzfläche zugeordnete Führungsschiene in einem Abstand in Längsrichtung des Schienenfahrzeugs und/oder in Vertikalrichtung angeordnet ist. Die Begrifflichkeiten "führerhausseitig" bzw. "sitzseitig" sind dahingehend zu verstehen, dass die jeweilige Komponente entweder fest am Führerhaus, insbesondere an einer Wand des Führerhauses, angeordnet ist oder andererseits fest am Sitz angeordnet ist und sich mit diesem bei einer Verstellbewegung mitbewegt. Beispielsweise können die führerhausseitigen Führungsschienen mit sitzseitigen, insbesondere sitzflächenseitigen bzw. fußstützenseitigen Führungswägen zusammenarbeiten, um die Längsbewegung zu realisieren. Beispielsweise können Kugelumlaufwägen infrage kommen. Wie bereits erwähnt, begünstigt die doppelte Führungseinrichtungsanordnung aus mehreren führerhausseitigen Führungsschienen eine einfach zu betätigende und sich gleichmäßig fortbewegende Führungsbewegung des Führungssitzes entlang der Geradführung.

Gemäß einer weiteren beispielhaften Weiterbildung der vorliegenden Erfindung umfasst der Führerhaussitz ferner einen Rastmechanismus mit mehreren vordefinierten, insbesondere in einem gleichmäßigen Abstand in Längsrichtung des Schienenfahrzeugs angeordneten, Rastpositionen, an denen der Führerhaussitz gegen eine Längsverschiebung einrasten kann. Mit anderen Worten kann der Führerhaussitz zum einen in Längsrichtung stufenlos verschoben werden, zum anderen jedoch an vordefinierten Rastpositionen einrasten, wo er dann gegen eine weitere Verschiebbarkeit gesichert ist, bis die Verrastungsposition aufgehoben wird. Insofern ist der Rastmechanismus betätigbar und lösbar, beispielsweise manuell von einer Bedienperson, elektrisch oder pneumatisch.

Gemäß einer beispielhaften Ausführung des erfindungsgemäßen Führerhaussitzes weist der Rastmechanismus einen von einer Bedienperson betätigbaren vorgespannten, insbesondere federvorgespannten, Zughebel mit einem Rastbolzen auf, der in einer quer, insbesondere senkrecht, zur Seitenwand des Führerhauses, also insbesondere in Horizontalrichtung, orientierten Richtung zum Einnehmen der mehreren Rastpositionen verlagerbar ist. Mittels des Rastmechanismus ist es einer Bedienperson insofern möglich, den Führerhaussitz zum einen entgegen einer Längsverschiebbarkeit zu sichern, insbesondere für den Fahrbetrieb, und andererseits möglich, die Verschiebbarkeit zu ermöglichen, um den Führerhaussitz in unterschiedliche Betriebspositionen zu verlagern. Die mehreren Rastpositionen können beispielsweise durch in der Führungsschiene ausgebildete Aussparungen oder Nuten realisiert sein, in die der Rastbolzen insbesondere formschlüssig eingreifen kann, wodurch die weitere Verschiebbarkeit des Führerhaussitzes unterbunden ist. Sofern der Rastmechanismus betätigt wird und der Rastbolzen freigegeben wird, also aus der entsprechenden Aussparung in der Führungsschiene entfernt wird, ist die Sicherung aufgehoben und der Führerhaussitz kann verlagert werden.

Gemäß einer beispielhaften Weiterbildung ist der Rastbolzen in Richtung einer Rastposition zum insbesondere automatischen Einnehmen der jeweiligen Rastposition vorgespannt. Mit anderen Worten kann der Rastbolzen derart ausgelegt und/oder vorgespannt, insbesondere federvorgespannt, sein, dass der Rastbolzen unmittelbar bzw. automatisch in eine entsprechende Aussparung in der Führungsschiene einschnappt, sobald der Rastbolzen auf der jeweiligen Axialhöhe der entsprechenden Aussparung angelangt.

In einer weiteren beispielhaften Ausführung der vorliegenden Erfindung sind die Sitzfläche und die Fußstütze derart miteinander gekoppelt, dass die Fußstütze der Sitzfläche beim Wegklappen der Sitzfläche aus der Sitzposition folgt. Mit anderen Worten wird die Fußstütze beim Wegklappen der Sitzfläche durch eine Bedienperson insbesondere automatisch mit weggeklappt, sodass die Bedienperson nur eine einzige Aktion ausführen muss, um den gesamten Führerhaussitz in die Passivposition zu bringen. Beispielsweise sind die Sitzfläche und die Fußstütze über eine insbesondere elastische Koppeleinrichtung, wie eine Drehstabfeder oder dergleichen, miteinander gekoppelt. Insofern wird die der Sitzfläche aufgezwängte Bewegung durch die Bedienperson auf die Fußstütze übertragen. Die Sitzfläche und die Fußstütze können demnach gemeinsam weggklappt werden.

In einer weiteren beispielhaften Weiterbildung der vorliegenden Erfindung ist eine der Klappbewegung der Fußstütze zugeordnete Schwenkachse in Horizontalrichtung orientiert. Beispielsweise kann die Fußstütze derart an einer Seitenwand des Führerhauses gelagert sein, dass dessen Orientierung und/oder Schwenkachse veränderbar ist. Um den Komfort für die Bedienperson zu erhöhen, ist es hilfreich, verschiedene Einstellungen und Orientierungen für die Fußstütze zu schaffen, sodass die Bedienperson diese je nach Bedarf auf sich abstimmen kann.

Gemäß einer weiteren beispielhaften Ausführung des erfindungsgemäßen Führerhaussitzes ist eine der Klappbewegung der Fußstütze zugeordnete Schwenkachse in einem geringen Abstand zu einer Seitenwand des Führerhauses angeordnet. Durch die nahe Anordnung der Schwenkachse an der Führerhaus-Seitenwand ist gewährleistet, dass die Fußstütze in der Passivposition möglich platzsparend verstaut ist. Beispielsweise kann die Schwenkachse in etwa im Bereich der vertikalen Flucht eines seitenwandseitigen Endes der Fußstütze angeordnet sein. Beispielsweise ist diese Schwenkachse derart nahe an der Seitenwand angeordnet, dass die Fußstütze in der weggeklappten Passivposition insbesondere flächig parallel zur Seitenwand und/oder in einem Abstand von weniger als 10 cm zur Seitenwand angeordnet ist. Durch die parallele Anordnung der Fußstütze bezüglich der Seitenwand wird weiter dessen platzsparende Unterbringung begünstigt.

Gemäß einem weiteren Aspekt der vorliegenden Erfindung, der mit den vorhergehenden Aspekten und beispielhaften Ausführungen kombinierbar ist, ist ein Führerhaus für ein Schienenfahrzeug, insbesondere einer Mittelführerhaus-Lokomotive, bereitgestellt, die einen gemäß einem der zuvor beschriebenen Aspekte bzw. beispielhaften Ausführungen ausgebildeten Führerhaussitz umfasst. Das Führerhaus kann ferner eine Seitenwand, die sich insbesondere im Wesentlichen in Vertikalrichtung erstreckt, aufweisen, an welcher der Führerhaussitz befestigt ist und/oder längsverschiebbar und wegklappbar gelagert ist.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:

### Beschreibung von Ausführungsbeispielen

- Figuren 1 bis 3: verschiedene Sitzpositionen einer beispielhaften Ausführung eines erfindungsgemäßen Führeraussitzes in perspektivischer Ansicht;
- Figuren 4 bis 6: verschiedene Passivpositionen des Führeraussitzes aus den Figuren 1 bis 3; und
- Figur 7, 8: Schnittansichten eines Betätigungs- und Rastmechanismus einer beispielhaften Ausführung eines erfindungsgemäßen Führeraussitzes.

In der folgenden Beschreibung beispielhafter Ausführungen der vorliegenden Erfindung ist ein erfindungsgemäßer Führeraussitz im Allgemeinen mit der Bezugsziffer 1 versehen und gemäß den beispielhaften Ausführungen gemäß beiliegenden Figuren als längsverschiebbarer Klappsitz, insbesondere Beifahrerklappsitz, ausgebildet, der in einem Führerhaus einer Mittelführerhaus-Lokomotive (nicht dargestellt) anzuordnen bzw. angeordnet ist.

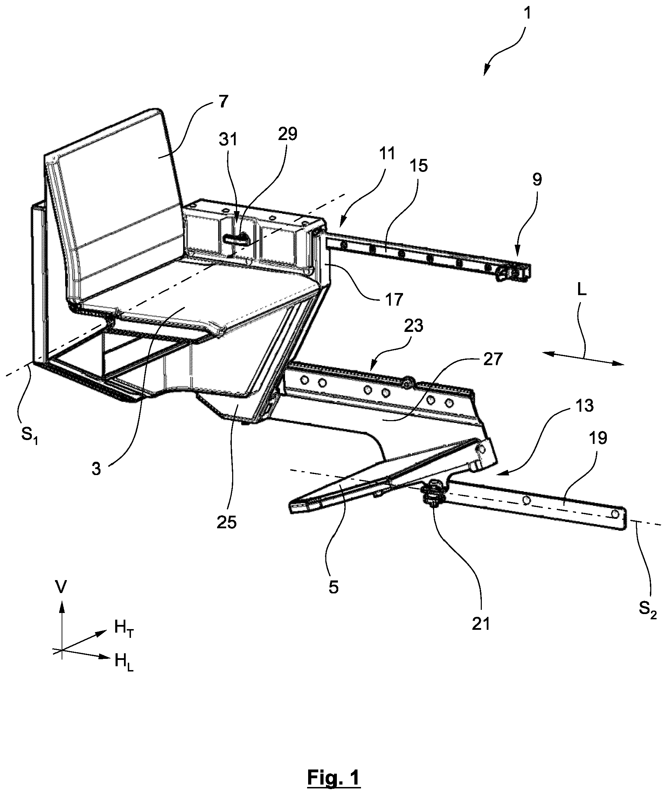

Der erfindungsgemäße Führerhaussitz 1 gemäß Figur 1 umfasst eine Sitzfläche 3 und eine Fußstütze 5 sowie eine benachbart der Sitzfläche 3 angeordnete Sitzlehne 7 und ist über eine Geradführung 9 längsverschiebbar an einer Seitenwand des Führerhauses gelagert bzw. angeordnet. Die Längsverschiebbarkeit des Führerhaussitzes 1 erfolgt über die Geradführung 9, welche eine der Sitzfläche 3 zugeordnete Führungseinrichtung 11 und eine der Fußstütze 5 zugeordnete Führungseinrichtung 13 umfasst. Beide Führungseinrichtungen 11, 13 basieren auf dem Konzept der Linearführung. Beispielsweise ist die der Sitzfläche 3 zugeordnete Führungseinrichtung als Schienenführung umfassend eine an der Seitenwand des Führerhauses anzuordnende Führungsschiene 15 und ein damit zusammenwirkender sitzseitiger Führungswagen 17 gebildet, der beispielsweise als Kugelumlaufwagen ausgebildet sein kann. Gleichermaßen umfasst die der Fußstütze 5 zugeordnete Führungseinrichtung 13 eine an der Seitenwand des Führerhauses zu befestigende bzw. befestigte Führungsschiene 19, die mit einer fußstützenseitigen Lagerkomponente 21, wie einem schienenartigen Führungswagen, einer auf Gleitreibung basierenden Führungskomponente oder einer abrollenden Führungskomponente, zusammenwirkt.

Gemäß einem Aspekt der vorliegenden Erfindung sind die Fußstütze 5 und die Sitzfläche 3 derart miteinander gekoppelt, insbesondere ist eine Längsverschiebbarkeit derart ausgebildet, dass bei einer Längsverschiebung des Führerhaussitzes 1 in einer Längsrichtung L des Schienenfahrzeugs sowohl die Sitzfläche 3 als auch die Fußstütze 5 gemeinsam bewegt werden, insbesondere parallel und äquidistant. Die Aneinander-Kopplung von Fußstütze 5 und Sitzfläche 3 kann über Gehäusestrukturen realisiert sein, die allgemein mit dem Bezugszeichen 23 versehen sind. Beispielsweise kann sich ausgehend von einem sitzseitigen Gehäuse- oder Verkleidungsteil 25 eine Auskragung, wie ein auskragender Tragarm 27 im Wesentlichen in der Längsrichtung L weg von der Sitzfläche 3 erstrecken und die Fußstütze 5 lagern bzw. tragen.

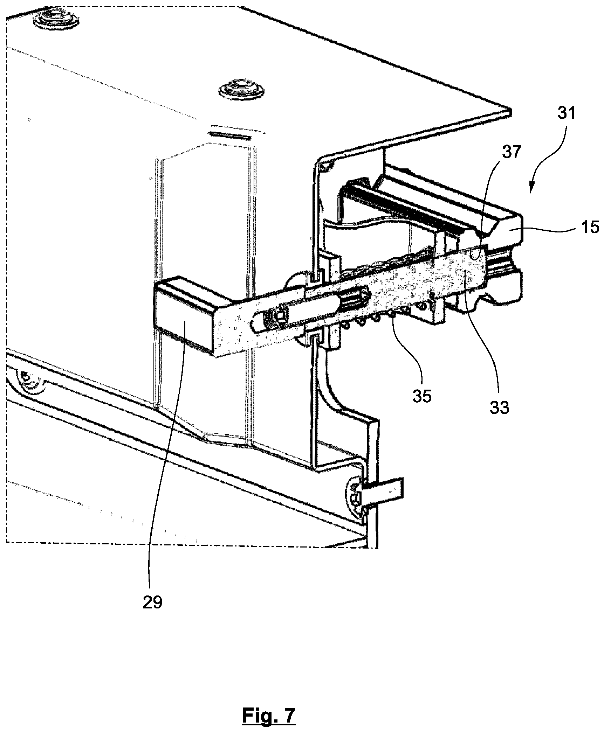

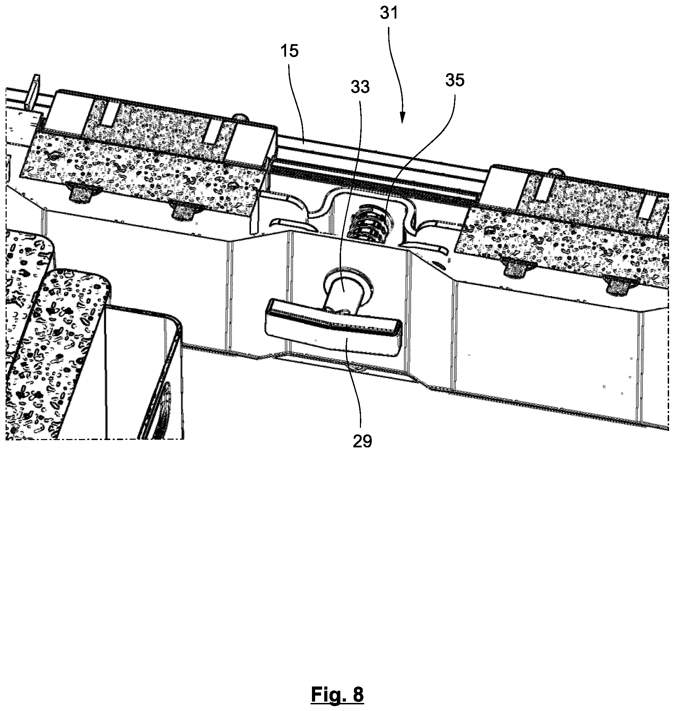

In Figur 1 ist ferner ein von einer Bedienperson betätigbarer Zughebel 29 eines Rastmechanismus 31 abgebildet, auf den in Bezug auf die Figuren 7 und 8 näher eingegangen wird.

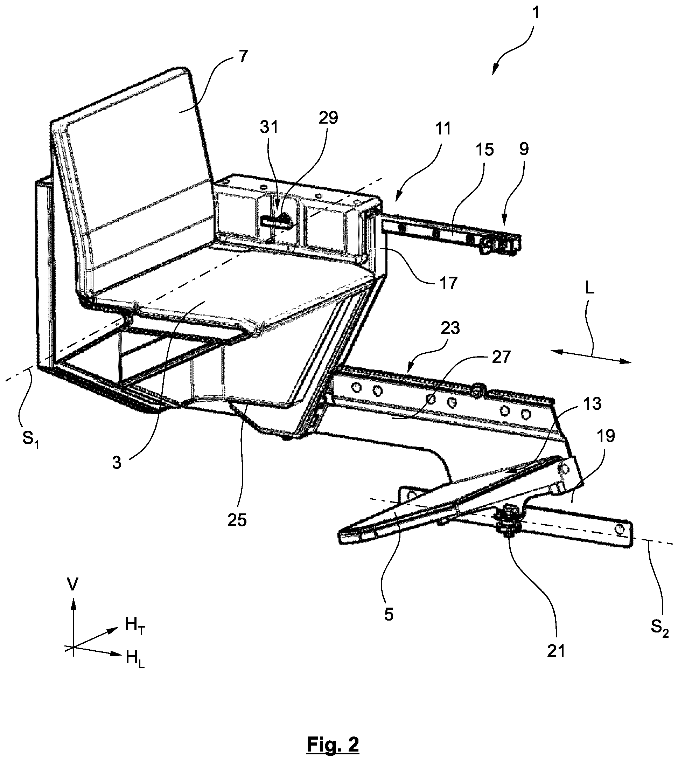

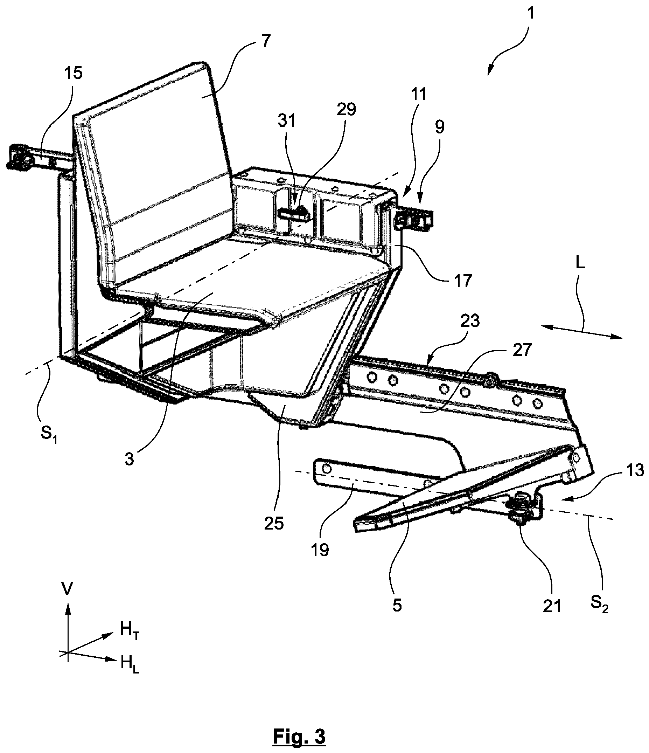

Aus einer Zusammenschau der Figuren 1 bis 3 ist die Längsverschiebbarkeit des Führerhaussitzes 1 ersichtlich. Der Führerhaussitz kann entlang der Führungsschienen 15, 19 längsverschoben werden, um unterschiedliche Sitzpositionen einnehmen zu können. Dabei ist ersichtlich, dass sich die Anordnung aus Sitzfläche 3 und Fußstütze 5 relativ zueinander nicht verändert, sondern stets konstant bleibt.

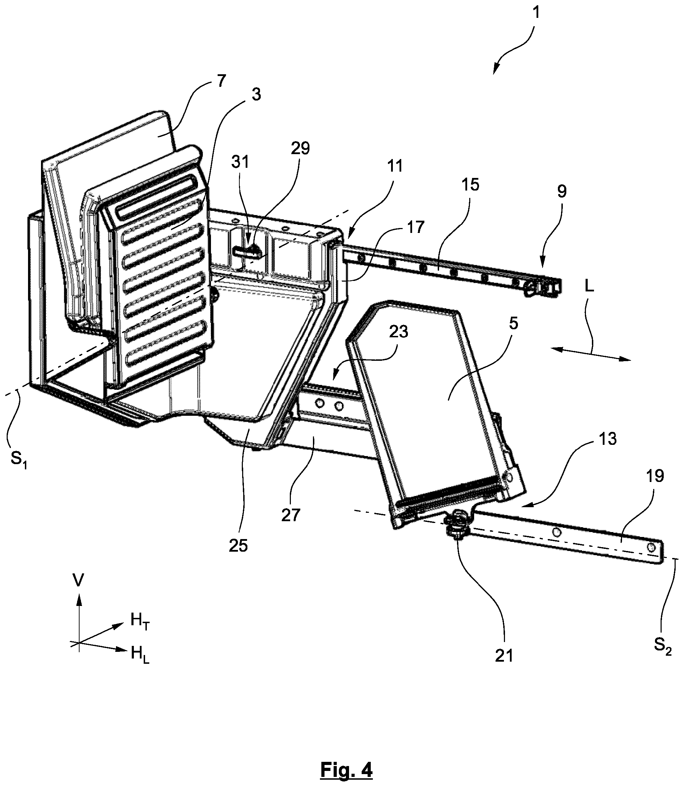

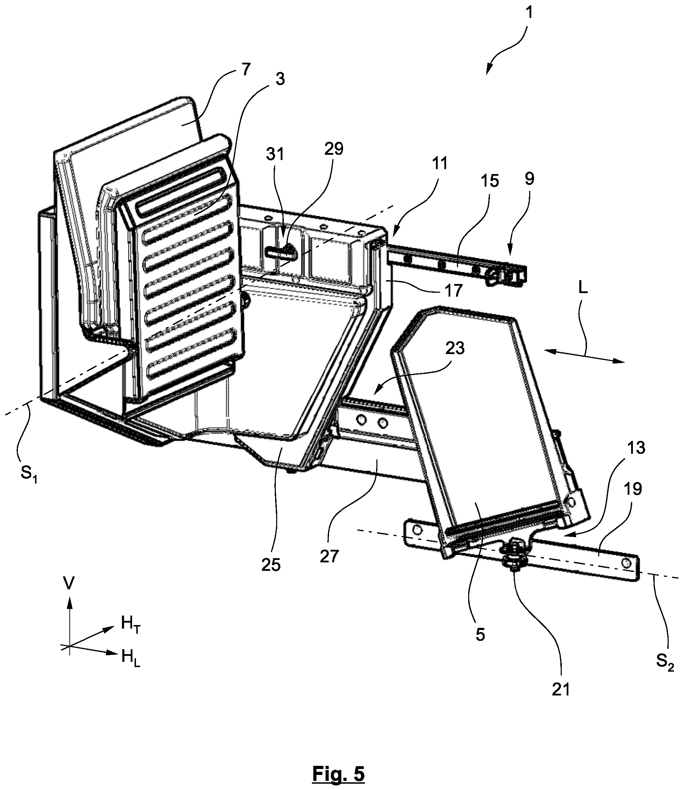

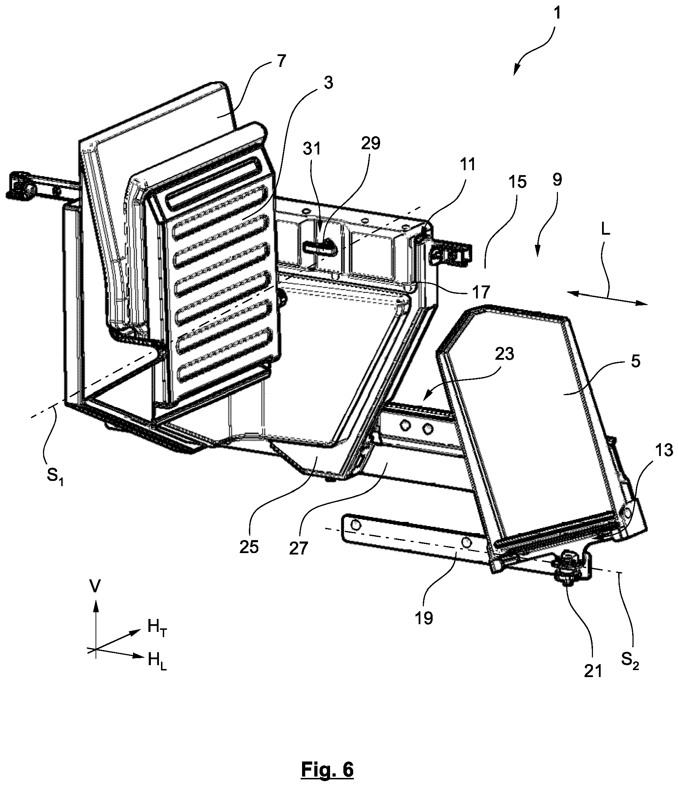

Unter Bezugnahme auf die Figuren 4 bis 6 sind analog zu den Sitzpositionen der Figuren 1 bis 3 entsprechende Passivpositionen gezeigt, in denen der Führerhaussitz 1 zur Schaffung von Raum verstaut ist. Die Verstauung erfolgt dadurch, dass sowohl die Sitzfläche 3 als auch die Fußstütze 5 aus der Bedienposition (Figuren 1 bis 3) weggeklappt sind. Aus den Figuren 4 bis 6 ist analog zu den Figuren 1 bis 3 ersichtlich, dass sich die Anordnung aus Sitzfläche 3 und Fußstütze 5 auch bei einer Längsverschiebung nicht verändert, sondern stets gleichbleibt.

In der Verstauungs- bzw. Passivposition ist die Sitzfläche im Wesentlichen in Vertikalrichtung V orientiert und zumindest abschnittsweise parallel zur Rückenlehne 7 angeordnet. Wie aus den Figuren 1 bis 6 ersichtlich ist, ist die Längsrichtung L im Wesentlichen in einer Horizontalrichtung H_{L} orientiert, die senkrecht zu einer mit dem Bezugszeichen H_{T} orientierten Horizontalrichtung liegt, welche im Wesentlichen eine Breitenrichtung des Führerhaussitzes 1 bzw. des Führungshauses andeutet. Aus einer Zusammenschau beispielsweise der Figuren 1 und 4 ist ersichtlich, dass die Fußstütze 5 um eine Schwenkachse S2 verschwenkt wird und ebenfalls in eine Vertikalorientierung gebracht ist, um möglichst platzsparend und/oder im Wesentlichen parallel zur Seitenwand orientiert zu sein. Aufgrund der nahen Anordnung der Schwenkachse S2 zur Seitenwand ergibt sich eine besonders platzsparende Passivposition des Führeraussitzes 1. S1 deutet die Schwenkachse der Sitzfläche 3 an.

Die Figuren 7 und 8 zeigen zwei verschiedene Schnittdarstellungen zum Rastmechanismus 31, der dafür verantwortlich ist, dass der Führerhaussitz 1 in mehreren vordefinierten, insbesondere in einem gleichmäßigen Abstand in Längsrichtung L des Schienenfahrzeugs angeordneten, Rastpositionen verrastbar ist, an denen der Führerhaussitz 1 gegen eine weitere Längsverschiebung gesichert ist. Der Rastmechanismus 31 umfasst den bereits angesprochenen Zughebel 29, an dem eine Bedienperson zum Aktivieren des Rastmechanismus 29 zu ziehen hat. Mit der Aktivierung des Rastmechanismus 31 geht eine Lösung der Verrastung bzw. der Sicherung des Führerhaussitzes entgegen einer Längsverschiebung einher.

Der Rastmechanismus 31 weist ferner einen mit dem Zughebel 29 vorgespannten, insbesondere federvorgespannten, Rastbolzen 33 auf, der von einer Feder 35 umlaufen ist, die die Vorspannung aufbringt. Wie insbesondere in Figur 7 zu sehen ist, weist die an der Seitenwand des Führerhauses zu befestigende bzw. befestigte Führungsschiene 15 pro Rastposition eine Aussparung 37 für den Rastbolzen 33 auf. Wenn der Rastbolzen 33, wie es in Figur 7 gezeigt ist, in der entsprechenden Aussparung 37 eingreift bzw. darin eingerastet ist, ist der Führerhaussitz 1 entgegen einer Längsverschiebung gesichert. Um die Verrastung aufzuheben, muss eine Bedienperson den Zughebel 29 betätigen, indem er diesen von der Seitenwand wegzieht, um den Bolzen 33 aus der Aussparung 37 herauszuziehen. Durch die Federvorspannung des Bolzens 33 in Richtung der Eingriffs- bzw. Rastposition kann der Bolzen 33 beim Überfahren der nächsten Aussparung 37 im Wesentlichen automatisch in diese einrasten, sofern der Benutzer den Zughebel 29 nicht weiter betätigt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Führerhaussitz
- 3: Sitzfläche
- 5: Fußstütze
- 7: Sitzlehne
- 9: Geradführung
- 11,13: Führungseinrichtung
- 15, 19: Führungsschiene
- 17: Führungswagen
- 21: Führungskomponente
- 23: Gehäusestruktur
- 25: Verkleidung
- 27: Auskragung
- 29: Zughebel
- 31: Rastmechanismus
- 33: Bolzen
- 35: Feder
- 37: Aussparung

- L: Längsrichtung
- V: Vertikalrichtung
- H_{T}: Höhenrichtung
- H_{L}: Horizontalrichtung
- S1: Schwenkachse Sitzfläche
- S2: Schwenkachse Fußstütze

## Patentansprüche

1. Führerhaussitz, insbesondere Führerhausklappsitz (1), vorzugsweise Führerhaus-Beifahrersitz, für ein Schienenfahrzeug, insbesondere eine Mittelführerhaus-Lokomotive, umfassend eine Sitzfläche (3) und eine Fußstütze (5), wobei der Führerhaussitz wenigstens eine Sitzposition, in der eine Bedienperson auf dem Führerhaussitz sitzen kann, und eine Passivposition einnehmen kann, in welcher die Sitzfläche (3) und die Fußstütze (5) aus der Sitzposition weggeklappt sind.

2. Führerhaussitz nach Anspruch 1, wobei der Führerhaussitz an einer Seitenwand des Führerhauses gelagert ist.

3. Führerhaussitz nach Anspruch 1 oder 2, wobei der Führerhaussitz in Längsrichtung des Schienenfahrzeugs insbesondere stufenlos längsverschiebbar ist.

4. Führerhaussitz nach Anspruch 3, wobei die Sitzfläche (3) und die Fußstütze (5) derart miteinander gekoppelt sind, dass die Fußstütze (5) der Sitzfläche (3) bei einer Längsverschiebung des Führerhaussitzes folgt.

5. Führerhaussitz nach Anspruch 3 oder 4, wobei der Führerhaussitz über eine Geradführung (9), wie eine Schienenführung, längsverschiebbar an einer Seitenwand des Führerhauses gelagert ist, wobei die Geradführung (9) eine der Sitzfläche (3) zugeordnete Führungseinrichtung (11) und eine der Fußstütze (5) zugeordnete Führungseinrichtung (13) umfasst.

6. Führerhaussitz nach Anspruch 5, wobei die der Fußstütze (5) zugeordnete Führungseinrichtung eine führerhausseitige Führungsschiene (19) aufweist, welche in Bezug auf eine führerhausseitige, der Sitzfläche (3) zugeordnete Führungsschiene (15) in einem Abstand in Längsrichtung (L) des Schienenfahrzeugs und/oder in Vertikalrichtung (V) angeordnet ist.

7. Führerhaussitz nach einem der Ansprüche 3 bis 6, ferner umfassend einen Rastmechanismus (31) mit mehreren vordefinierten, insbesondere in einem gleichmäßigen Abstand in Längsrichtung des Schienenfahrzeugs angeordneten, Rastpositionen, an denen der Führerhaussitz gegen eine Längsverschiebung einrasten kann.

8. Führerhaussitz nach Anspruch 7, wobei der Rastmechanismus (31) einen von einer Bedienperson betätigbaren vorgespannten, insbesondere federvorgespannten, Zughebel (29) mit einem Rastbolzen aufweist, der in einer quer, insbesondere senkrecht, zur Seitenwand des Führerhauses orientierten Richtung zum Einnehmen der mehreren Rastpositionen verlagerbar ist.

9. Führerhaussitz nach Anspruch 8, wobei der Rastbolzen in Richtung einer Rastposition zum insbesondere automatischen Einnehmen der Rastposition vorgespannt ist.

10. Führerhaussitz nach einem der vorstehenden Ansprüche, wobei die Sitzfläche (3) und die Fußstütze (5) derart miteinander gekoppelt sind, dass die Fußstütze (5) der Sitzfläche (3) beim Wegklappen der Sitzfläche (3) aus der Sitzposition folgt, wobei insbesondere die Sitzfläche (3) und die Fußstütze (5) über eine insbesondere elastische Koppeleinrichtung, wie eine Drehstabfeder, miteinander gekoppelt sind.

11. Führerhaussitz nach Anspruch 10, wobei eine der Klappbewegung der Fußstütze (5) zugeordnete Schwenkachse in Horizontalrichtung orientiert ist, wobei insbesondere die Fußstütze (5) derart an einer Seitenwand des Führerhauses gelagert ist, dass dessen Orientierung und/oder Schwenkachse veränderbar ist.

12. Führerhaussitz nach Anspruch 10 oder 11, wobei eine der Klappbewegung der Fußstütze (5) zugeordnete Schwenkachse in einem geringen Abstand zu einer Seitenwand des Führerhauses angeordnet ist, wobei insbesondere die Schwenkachse derart nah an der Seitenwand angeordnet ist, dass die Fußstütze (5) in der weggeklappten Passivposition insbesondere flächig parallel zur Seitenwand und/oder in einem Abstand von weniger als 10 cm zur Seitenwand angeordnet ist.

13. Führerhaus für ein Schienenfahrzeug, insbesondere eine Mittelführerhaus-Lokomotive, umfassend wenigstens einen nach einem der vorstehenden Ansprüche ausgebildeten Führerhaussitz.
